# EUROPEAN PATENT SPECIFICATION

(11) **EP 0 614 159 B1**
(45) Date of publication and mention of the grant of the patent: **26.10.2005**
(21) Application number: 93924173.3
(22) Date of filing: 04.11.1993
(51) Int. Cl.: G07F 7/10, G06K 19/00, G06K 17/00

(54) **IC CARD**
CHIPKARTE
CARTE A PUCE

(30) Priority: 04.11.1992 JP 29486392
(43) Date of publication of application: 07.09.1994
(73) Proprietor: FUJITSU LIMITED, Kawasaki-shi, Kanagawa 211 (JP)
(72) Inventor: MIYAZAKI, Junsuke, Kawasaki-shi, Kanagaw11 (JP); HARA, Hideaki, Fuji Research Institute Corporation, Tokyo 108 (JP)
(74) Representative: Kreutzer, Ulrich
(86) International application number: PCT/JP1993/001595
(87) International publication number: WO 1994/010655

(56) References cited:
- EP-A- 0 186 038
- EP-A- 0 483 978
- WO-A-86/03040
- WO-A-87/07062
- WO-A-92/13322
- FR-A- 2 667 192
- JP-A- 1 295 385
- JP-A- 2 053 154
- JP-A- 4 137 081
- JP-A- 60 181 891
- JP-A- 61 160 174
- JP-A- 61 296 486
- JP-A- 62 177 696
- JP-A- 62 257 555
- JP-U- 61 176 667
- US-A- 4 804 825
- US-A- 4 808 802

## Description

### TECHNICAL FIELD

The present invention relates to an IC card and, particularly, to an improved novel IC card which enables not only high-speed access but also realizing the data security at an item level as well as to an IC card which realizes the data security by preventing unauthorized access.

### BACKGROUND ART

Use of IC cards becomes popular as the information technologies are developed. Since important personal data are stored in the IC cards, it is necessary to provide IC cards the functions which do not permit unauthorized access to the data of individual persons.

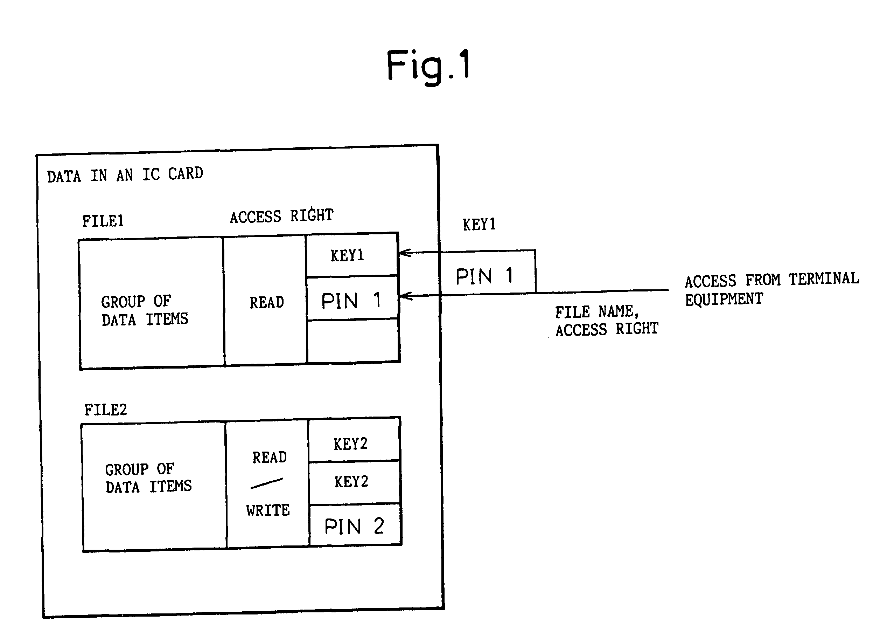

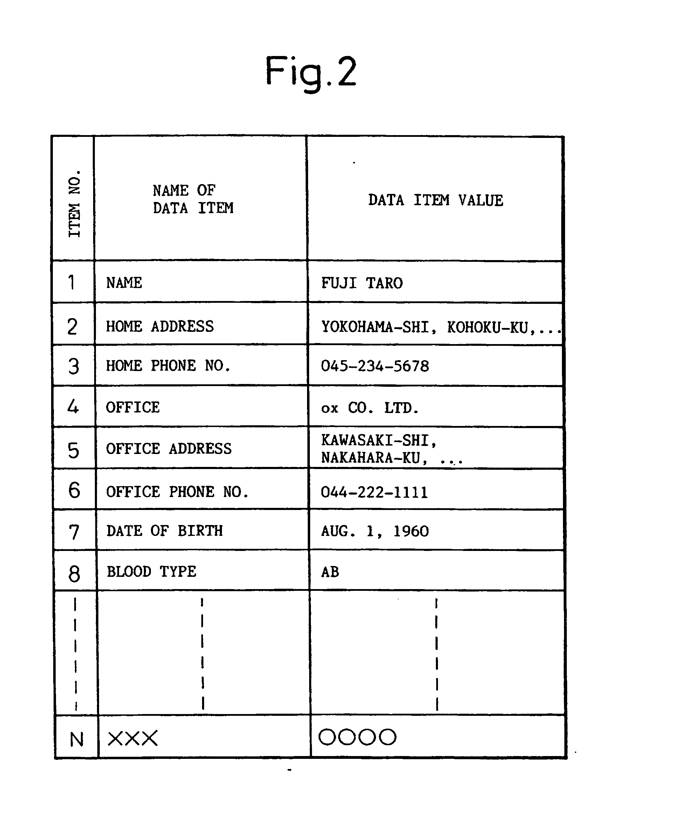

Fig. 1 shows a method of making access to an IC card that has heretofore been proposed. Referring to the IC card 1 of Fig. 1, PIN which is a personal identification number of a card owner, a key which is a password formed by the terminal equipment, a file name at the destination of access, and access right are input to the IC card in compliance with a program in the terminal equipment in which the IC card is inserted. Access is permitted to a designated file data when the PIN that is input is in agreement with a PIN key that has been set in a file at a destination of access, when a key that is input is in agreement with a key that has been set in the file at the destination of access, and when access right that is input is in agreement with access right that has been set in the file at the destination of access. The file data to which access is permitted comprises a plurality of data items as shown in Fig. 2.

Here, the access right stands for such kinds of right as right for reading the IC card, right for writing on the IC card and right for reading and writing on the IC card. The "Item No." in Fig. 2 may not often be stored as data in the file data and, when addresses have been determined for each of the data, the "Name of Data Item" in Fig. 2 may not often be stored as data.

According to such an access method, protection of secrecy of data is realized with the file data as a unit arousing a problem in that access can be obtained to data items which have not really been aimed at by the program. That is, referring to the example of Fig. 2, it becomes possible to make access to the data item "OFFICE" in a file even though the program is not really making access to this data item. Thus, the secrecy of data is not protected.

To cope with this problem, the present applicant has previously filed a patent application entitled "SYSTEM FOR PERMITTING ACCESS TO DATA FIELD AREA IN IC CARD FOR MULTIPLE SERVICES" (see Japanese Unexamined Patent Publication (Kokai) No. 63-73348).

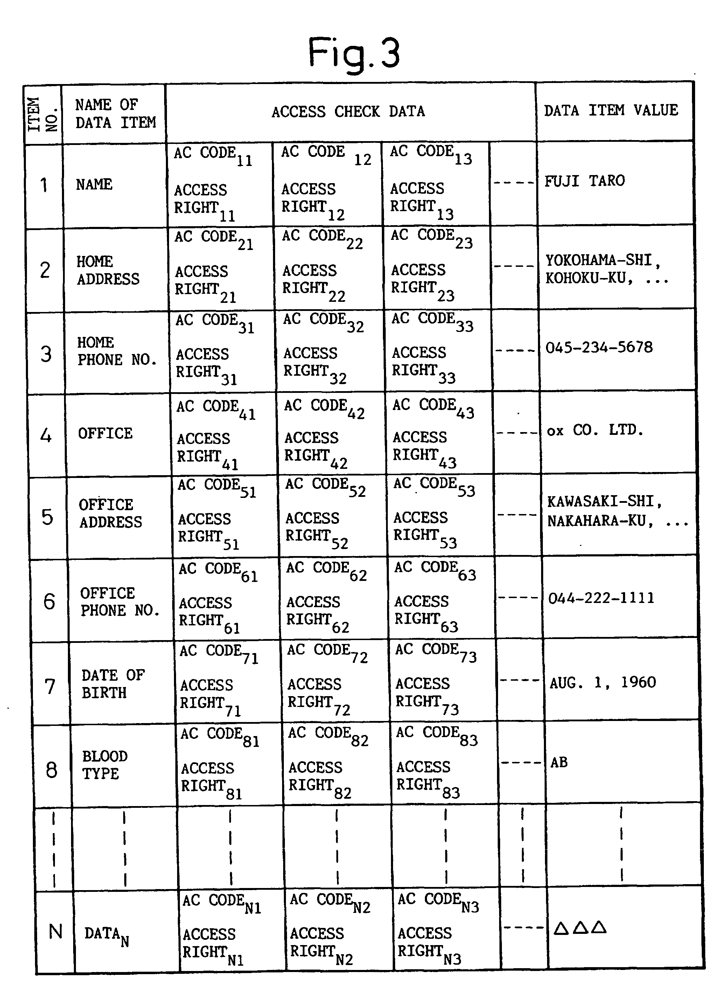

In the file data according to this system as shown in Fig. 3, the access code (AC code)/access right are set for each of the data items. Therefore, access to the data item is permitted only when the access code/access right input through the terminal equipment are in agreement with the access code/access right that have been set to a data item for which access is requested. Here, PIN may be set for each of the data items in addition to the access code and access right.

According to this example, whether access be permitted or not is controlled with each data item as a unit making it possible to reliably protect the secrecy of data of the IC card. To make access to a plurality of data items, however, the access processing must be executed a plurality of times causing a new problem in that the speed of access to the data becomes slow.

According to the conventional IC card described above, on the other hand, no active processing is carried out on the side of the IC card after the IC card is inserted in the terminal equipment even though no access request is output from the program of the terminal equipment for a long period of time. That is, the processing is carried out only according to the program of the terminal equipment.

When no active processing is executed on the side of the IC card, however, there remains a problem in that the IC card may be used by an unauthorized person who is not the owner of the card. For instance, an authorized card owner who is just changing the PIN may happen to leave the terminal equipment for some reason. Then, another unauthorized person may set a new PIN to the IC card and may leave the place carrying it with him. Should that happen, personal data of the authorized card owner may be used without authorization and the secrecy can no longer be maintained.

Moreover, in case trouble occurs on the side of the terminal equipment while access is being made to the IC card and access is incompletely finished, updating of the data in the IC card may end unfinished. In fact, however, attention has not been much given to restoring the data in the IC card by the IC card itself, and laborious work is required for restoring the data.

### DISCLOSURE OF THE INVENTION

The present invention was accomplished in view of the above-mentioned circumstances, and its object is to provide a novel IC card which realizes the protection of secrecy of data at an item level and, at the same time, permits access to be made at a high speed.

Another object of the present invention is to provide a novel IC card which realizes the protection of secrecy of data by preventing the unauthorized use.

A further object of the present invention is to provide a novel IC card capable of restoring the data from the updating of incomplete data caused by trouble on the side of the terminal equipment.

In order to achieve the above-mentioned objects, the present invention provides an IC card for managing item values of a plurality of data items utilized for one or a plurality of services, comprising:
managing means for managing, depending upon the services, access level values and access level values and access rights allocated for the data items;
retrieval means which, when a kind-of-service data and an access level value data are given as an access code from an external unit, makes reference to the management data of said managing means designated by said kind-of-service data, and retrieves data items designated by said access level value data on condition of having an access right; and
access means which makes a batchwise access to the item values of the data items retrieved by said retrieval means.

### BRIEF DESCRIPTION OF DRAWINGS

Fig. 1 is a diagram for explaining a first conventional IC card;
Fig. 2 is a diagram illustrating a first example of file data stored in the IC card of Fig. 1;
Fig. 3 is a diagram illustrating a second example of file data stored in the IC card of Fig. 1;
Fig. 4 is a diagram illustrating the constitution of an IC card according to a first embodiment of the present invention;
Fig. 5 is a diagram illustrating a first example of contents stored in the managing means and in the file data storage means of Fig. 4;
Fig. 6 is a flow chart explaining the process flow of an IC card equipped with managing means and file data storage means of Fig. 5;
Fig. 7 is a diagram explaining the outputs of results of access by the process flow of Fig. 6;
Fig. 8 is a diagram illustrating a second example of the contents stored in managing means and in file data storage means of Fig. 4;
Fig. 9 is a flow chart explaining the process flow of an IC card equipped with managing means and file data storage means of Fig. 8; and
Fig. 10 is a diagram explaining the outputs of results of access by the process flow of Fig. 9.

### BEST MODE FOR CARRYING OUT THE INVENTION

A first embodiment of the present invention will now be described in detail in conjunction with the drawings.

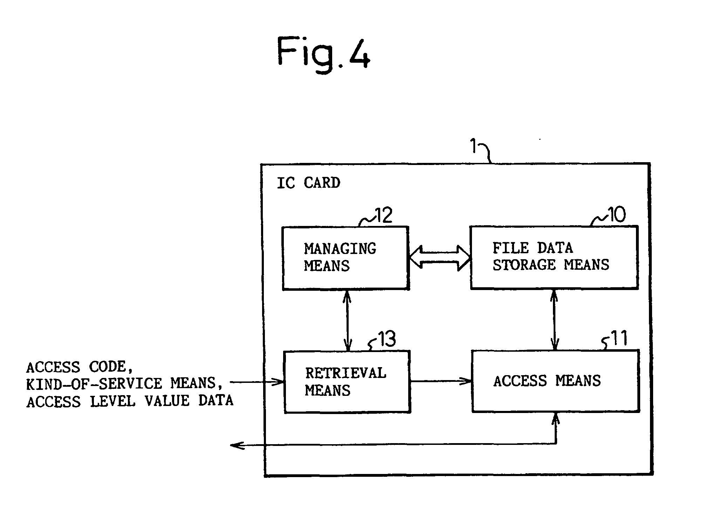

Fig. 4 illustrates the constitution of an IC card realizing the protection of secrecy of data yet enabling high-speed access to be carried out. The IC card shown in Fig. 4 manages values of a plurality of data items used for one or a plurality of services, and has a file data storage means 10, an access means 11, a managing means 12, and a retrieval means 13.

The file data storage means 13 stores the values of the plurality of data items pertaining to the files with a file as a unit. The access means 11 makes an access to the values of data items stored in the file data storage means 10. The managing means 12 stores the name DI, the key KY and the personal identification number PIN for the group of data items, and further stores, for each of the services, the access level value and the access right allocated for each of the data items. The retrieval means 13 retrieves the data managed by the managing means 12 and determines the data item at a destination of access.

According to another example, the managing means 12 manages a specific access level value specific to a data item that is used in common for all services, and manages, depending upon the services, the specific access level value to which link will be made and the access right allocated for each of the data items.

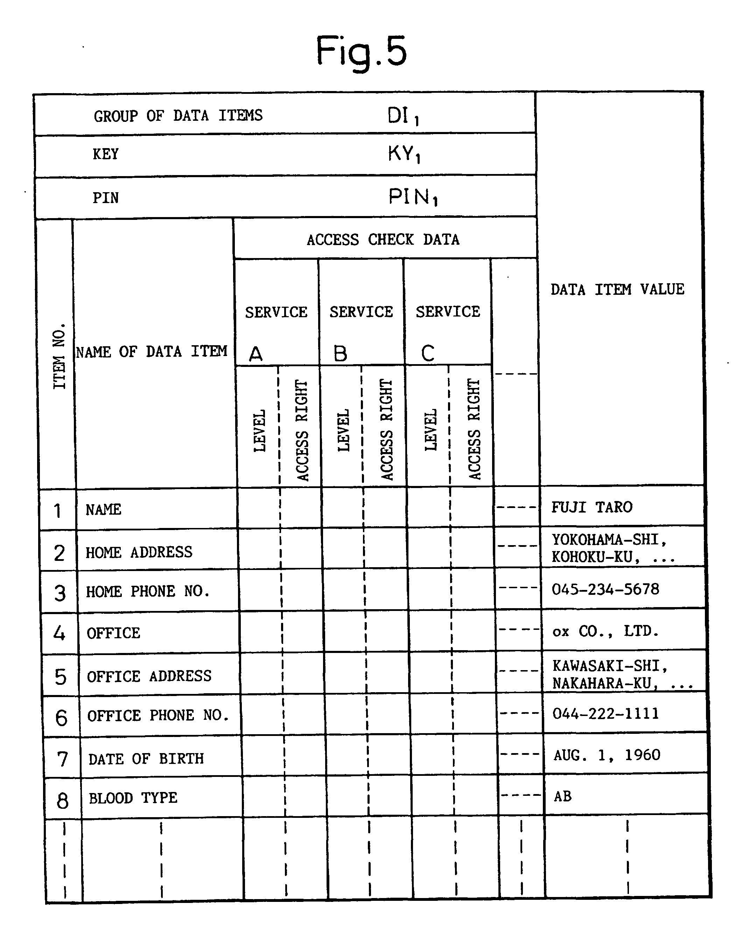

Fig. 5 illustrates a first example of management data stored in the managing means 12 of the IC card 1 and of the values of data items stored in the file data storage means 10. Fig. 5 shows the management data stored in the managing means 12 together with the values of data items stored in the file data storage means. That is, the values of data items shown on the extreme right side are stored in the file data storage means 10, and the data on the left side thereof are stored in the managing means 12 as management data.

The managing means 12 stores the group of data items (DI), key (KY) and personal identification number (PIN) for all of the management data, and stores, depending upon the services, the access level values and access rights allocated to the data items. As for the name of data item "NAME", for instance, the managing means 12 stores an access level value "0"/write right "R" allocated to the serve A, access level value "01"/write right "R" allocated to the service B, and access level value "01"/write right "R" allocated to the service C.

As for the name of data item HOME ADDRESS", the managing means 12 stores the access level value "02"/read-wright right "RW" allocated to the service A, access level value "03"/read-write right "RW" allocated to the service B, and access level value "02"/read right "R" allocated to the service C.

Here, by taking an example of bank service, the access level value stands for the height of level for permitting access such as access level value "10" for the manager of a branch office, access level value "05" for a general bank employee, and access level value "99" for a card owner.

In the example shown in Fig. 5, the PIN is used in common for a group of data items. It is, however, allowable to set PINs for each of the data items. For instance, access level value "01"/access right"R"/PIN "00289456" may be set for the service A, and access level value "01"/access right "R"/PIN "00289434" may be set for the service B of the name of data item, "NAME".

Described below is how to process the thus constituted IC card.

First, the operation will be briefly described. The retrieval means 13 is served, from an external terminal equipment, with a designated file name, a key, a PIN, and as an access code, a kind-of-service data and an access level value data. In accordance with the management data in the managing means 12, the retrieval means 13 specifies a group of data items relying upon the designated file name, and makes reference to the key and PIN. The retrieval means 13 then makes reference to the access level values that are classified into the designated kind-of-service data on condition of having an access right that matches with the designated access right. The retrieval means 13 then specifies a data item having an access level value smaller than the access level value data that is input.

As the retrieval means 13 thus retrieves a plurality of data items designated by the access codes, the result of retrieval is then handed over to the access means 11. By using the retrieved data items, the access means 11 makes a batchwise access to the values of data items stored in the file data storage means 10. The access means 11 outputs the result of access to an external unit.

Thus, a plurality of items can be executed through one time of access processing; i.e., high-speed access can be realized while realizing the protection of secrecy of data at the item level.

In the foregoing description, the retrieval means 13 specifies a data item having an access level value smaller than the access level value that is input. It is, however, also allowable instead to set an access level value so as to specify a data item that has a large access level value.

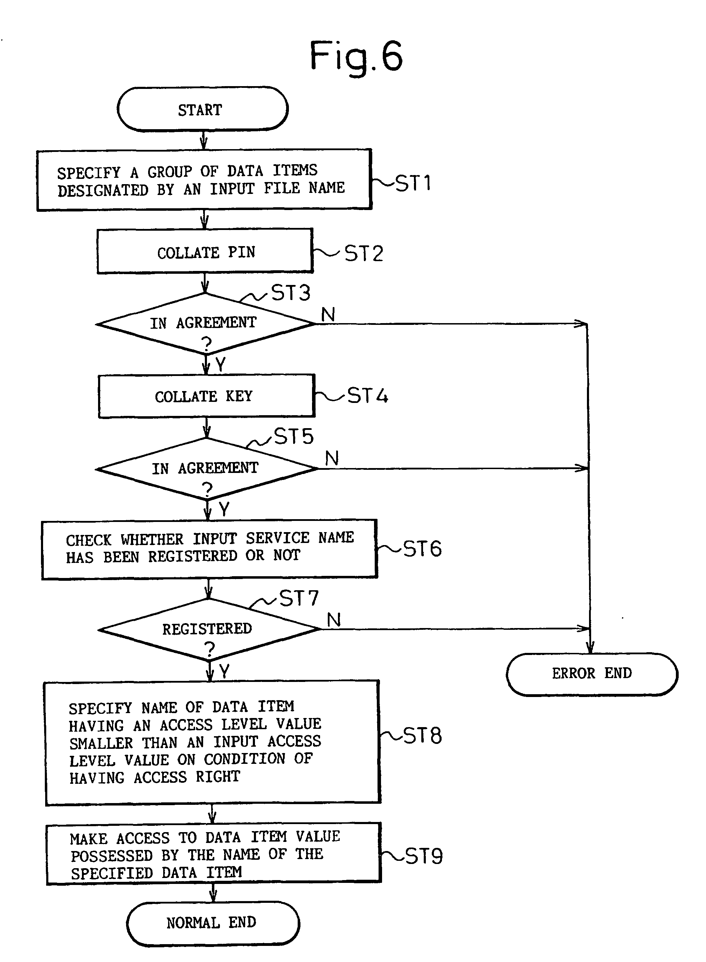

The process flow for executing the above-mentioned IC card will now be described by using a flow chart of Fig. 6.

At a step 1, the IC card 1 specifies a group of data items designated by the file name that is input. That is, a group of data items as shown in Fig. 5 among a plurality management data, is specified as a group of data items to which access is requested.

Then, a step 2 collates the PIN that is input with the PIN possessed by the specified group of data items. When it is judged at a step 3 that the two are not in agreement, the program ends as an error. When it is judged that the two PINs are in agreement, the program proceeds to a step 4 where the key that is input is collated with the key possessed by the specified group of data items. When it is judged at a step 5 that the two are not in agreement as a result of collation, the program ends as an error. When it is judged that the two keys are in agreement, the program proceeds to step 6 where it is checked whether the service name that is input has been registered in the specified group of data items or not.

When it is judged at a step 7 as a result of checking that the service name that is input has not been registered, the program ends as an error. When it is judged that the service name has been registered in the specified group of data items, the program proceeds to a step 8 where reference is made to access level values that are classified into input service names included in the specified group of data items, and the name of data item having an access level value smaller than the input access level value is specified on condition of having access right that matches with the access right that is input. Finally, a step 9 makes a batchwise access to the data item value possessed by the name of the specified data item, thereby to complete the processing.

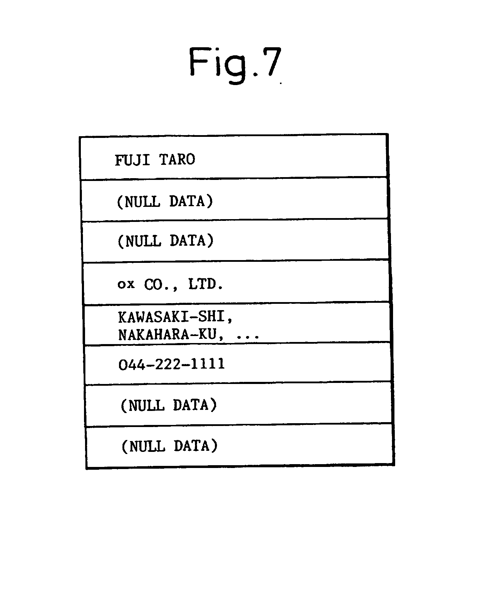

In the above-mentioned embodiment, when an access code, i.e., access level value "02" of service B, is input from the terminal equipment, access can be made to the result of access shown in Fig. 7 through one time of access processing. As described above, the IC card of the present invention is capable of executing the processing for making access to a desired data item through one time of access processing and by designating only one access code yet realizing the protection of secrecy of data on the item level.

Described below is another example of the managing means 12.

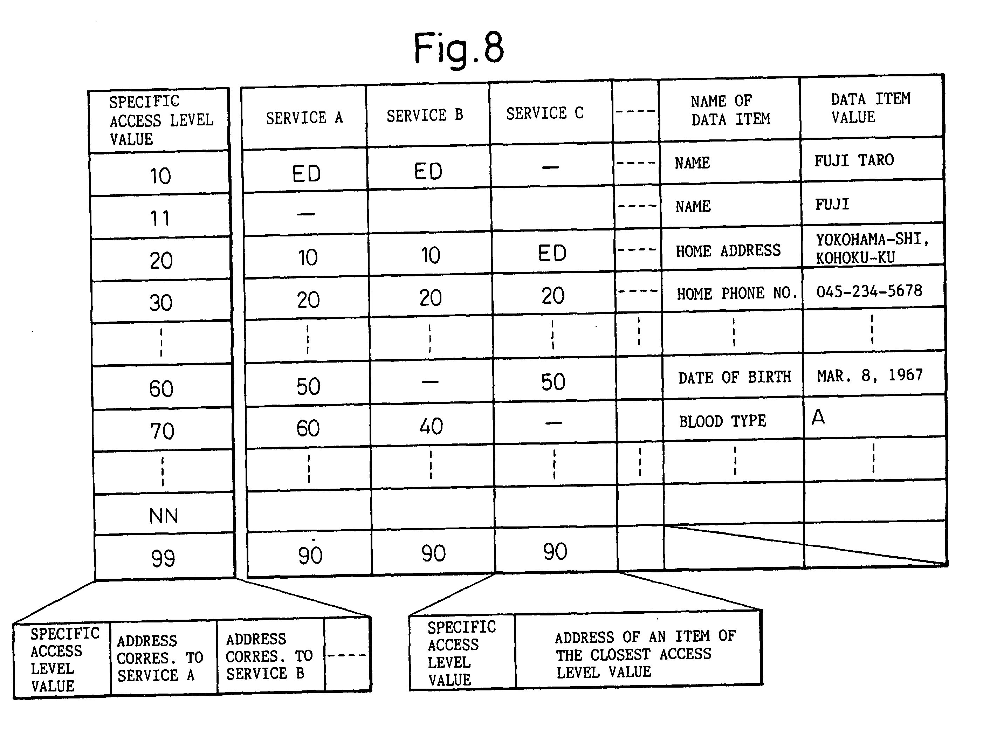

Fig. 8 illustrates a second example of the management data stored in the managing means 12 and the data item values stored in the file data storage means 10. Here, Fig. 8 illustrates specific access level values and further illustrates only those portions that are different from the management data of Fig. 5. Nearly the same holds even in the following description of processing operation.

The managing means 12 shown in Fig. 8 stores specific access level values that are common for the group of data items and, further stores, depending upon the services, the specific access level values at destinations of links allocated to the data items. As for the specific access level values that will be used in common, there are shown destinations of links that have the same or smaller specific access level values and are closest thereto but that have not been linked yet.

As for the specific access level values allocated to the data items, for example, as for the name of data item "HOME ADDRESS", the managing means 12 stores specific access level value "10" at a destination of link allocated to the service A, specific access level value "10" at a destination of link allocated to the service B, and specific access level value "ED" at a destination of link allocated to the service C.

As for the name of data item "HOME PHONE NO.", the managing means 12 stores specific access level value "20" at a destination of link allocated to the service A, specific access level value "20" at a designation of link allocated to the service B, and specific access level value "20" at a destination of link allocated to the service C. Though not diagramed in Fig. 8, the managing means 12 further stores the kinds of access rights. In Fig. 8, symbol "ED" denotes a final data which has the lowest specific access value in the service and has the address value to be linked of "00".

Described below is how to process the IC card that uses the above-mentioned second management data.

First, the operation will be described briefly. The retrieval means 13 is served, as an access code from an external unit, with a kind-of-service data and an access level value data. In accordance with the management data in the managing means 12, the retrieval means 13 specifies a group of data items like the one shown in Fig. 8 relying upon the file name that is designated. The retrieval means 13 then uses the access level value as an initial specific access level value on condition of having access right that matches with the designated access right. The retrieval means 13 makes reference to specific access level values that agree with the specific access level values that are commonly used for the group of data items, successively traces the specific access level values designated by the destinations of link included in the data items possessed by the service data thereby to specify the specific access level values to be linked and hence to specify the data items having the specific access level values to be linked.

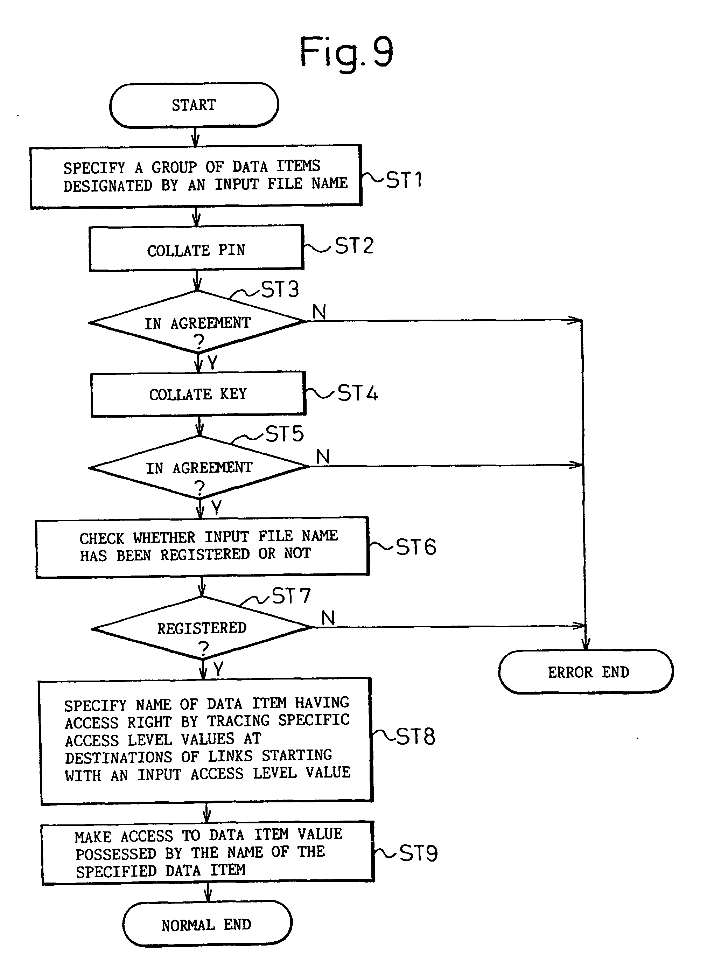

The processing executed by the above-mentioned IC card will be described by using a flow chart of Fig. 9. In this flow chart, the processings from a step 1 to a step 7 are the same as those explained in the process flow of Fig. 6. That is, it is judged whether the PIN/KEY possessed by the group of data items designated by the input file name is in agreement with the PIN/KEY that are input and, besides, whether the service name input to the group of data items has been registered therein or not.

The program then proceeds to a step 8 where the processing is repetitively carried out to first specify a specific access level value of a destination of link stored being corresponded to a specific access level value that is in agreement with an input access level value, to specify a specific access level value of a destination of link stored being corresponded to the specific access level value that agrees with the above specific access level value in the destination of link, and then to specify a specific access level value in a destination of link stored being corresponded to the above specific access level value that agrees with the specific access link value in the destination of link. This makes it possible to specify the name of the data item designated by the specific access level value that is to be linked to the input access level value. The name of data item having access right that matches with the input access right is specified out of the names of the thus specified data items.

When an access code, i.e., input access level value "30" of service A is input through the terminal equipment while managing means 12 is storing the data shown in Fig. 8 according to a particular processing of the names of data items based upon the link trace processing, then, there are specified the names of three items, i.e., HOME PHONE NO." having a specific access level value "30", "HOME ADDRESS" having a specific access level value "20", and "NAME" having a specific access level value "10".

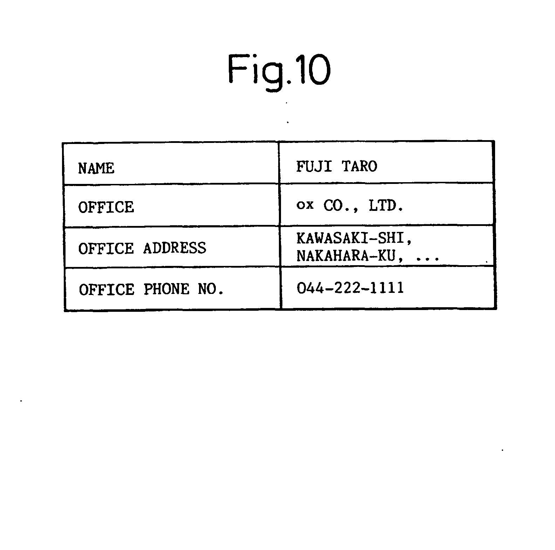

Then finally at a step 9, access is made batchwisely to the data item values possessed by the specified names of the data items to finish the processing. The results of this access are shown in Fig. 10.

When the managing means 12 employs the data storage structure of Fig. 5 without taking the access right into consideration, access will be made to all of the data items of lower than the input access level value. When the managing means 13 employs the data storage structure of Fig. 8, on the other hand, access will be made to the data items that are linked to the input access level value; i.e., the managing means 12 employs the data managing structure of Fig. 3, enabling the objects of access to be flexibly selected.

By executing the process flow of Fig. 9 as described above, the IC card of the present invention carries out access processing to desired data items through only one time of access processing requiring only one access code to be designated, yet realizing the protection of secrecy of data at the item level.

## Claims

1. An IC card for managing item values of a plurality of data items utilized for single or plurality services, comprising:
- managing means (12) for managing, depending upon the services, access level values and access rights allocated for the data items;
- retrieval means (13) which, when a kind-of-service data and an access level value data are given as an access code from an external unit, makes reference to the management data of said managing means (12) designated by said kind-of-service data, and retrieves data items designated by said access level value data on condition of having an access right; and
- access means (11) which makes a batchwise access to the item values of the data items retrieved by said retrieval means (13).

2. An IC card according to claim 1, wherein the retrieval means (13) retrieves data items of access level values smaller than an access level value given from an external unit.

3. An IC card according to claim 1, wherein the retrieval means (13) retrieves data items of access level values larger than an access level value given from an external unit.

4. An IC card according to claim 1, wherein the managing means (12) manages, depending upon the services, the specific access level values that are common for said plurality of data items utilized for single or plurality services and the specific access level values at destinations of link allocated to said data items.

5. An IC card according to claim 4, wherein the retrieval means (13) retrieves data items of access level values smaller than an access level value given from an external unit.

6. An IC card according to claim 4, wherein the retrieval means (13) retrieves data items of access level values larger than an access level value given from an external unit.

## Patentansprüche

1. IC-Karte zum Verwalten von Elementwerten einer Vielzahl von Datenelementen, die für einzelne oder eine Vielzahl von Diensten genutzt werden, mit:
einem Verwaltungsmittel (12) zum Verwalten, in Abhängigkeit von den Diensten, von Zugriffsstufenwerten und Zugriffsrechten, die den Datenelementen zugeordnet sind;
einem Suchmittel (13), das dann, wenn Daten einer Dienst-Art und Zugriffsstufenwertdaten als Zugriffscode von einer externen Einheit vorgegeben sind, auf die Verwaltungsdaten des Verwaltungsmittels (12) Bezug nimmt, die durch die Daten der Dienst-Art bezeichnet werden, und Datenelemente heraussucht, die durch die Zugriffsstufenwertdaten bezeichnet werden, unter der Bedingung, daß es ein Zugriffsrecht hat; und
einem Zugriffsmittel (11), das einen stapelweisen Zugriff auf die Elementwerte der Datenelemente vollzieht, die durch das Suchmittel (13) herausgesucht wurden.

2. IC-Karte nach Anspruch 1, bei der das Suchmittel (13) Datenelemente mit Zugriffsstufenwerten heraussucht, die kleiner als ein Zugriffsstufenwert sind, der von einer externen Einheit vorgegeben ist.

3. IC-Karte nach Anspruch 1, bei der das Suchmittel (13) Datenelemente mit Zugriffsstufenwerten heraussucht, die größer als ein Zugriffsstufenwert sind, der von einer externen Einheit vorgegeben ist.

4. IC-Karte nach Anspruch 1, bei der das Verwaltungsmittel (12), in Abhängigkeit von den Diensten, die spezifischen Zugriffsstufenwerte verwaltet, die der Vielzahl von Datenelementen gemeinsam sind, die für einzelne oder eine Vielzahl von Diensten genutzt werden, und die spezifischen Zugriffsstufenwerte an Verbindungszielen, die den Datenelementen zugeordnet sind.

5. IC-Karte nach Anspruch 4, bei der das Suchmittel (13) Datenelemente mit Zugriffsstufenwerten heraussucht, die kleiner als ein Zugriffsstufenwert sind, der von einer externen Einheit vorgegeben ist.

6. IC-Karte nach Anspruch 4, bei der das Suchmittel (13) Datenelemente mit Zugriffsstufenwerten heraussucht, die größer als ein Zugriffsstufenwert sind, der von einer externen Einheit vorgegeben ist.

## Revendications

1. Carte à puce pour gérer des valeurs d'élément d'une pluralité d'éléments de données utilisés pour un ou une pluralité de services, comprenant :
- un moyen de gestion (12) pour gérer, en fonction des services, des valeurs de niveau d'accès et des droits d'accès affectés aux éléments de données ;
- un moyen de recherche (13) qui, quand des données de type de service et des données de valeur de niveau d'accès sont fournies comme code d'accès à partir d'une unité externe, se réfère aux données de gestion dudit moyen de gestion (12) indiqué par lesdites données de type de service et va chercher des éléments de données indiquées par lesdites données de valeur de niveau d'accès à la condition d'avoir un droit d'accès ; et
- un moyen d'accès (11) qui réalise un accès par lots aux valeurs d'élément des éléments de données retrouvés par ledit moyen de recherche (13).

2. Carte à puce selon la revendication 1, dans laquelle le moyen de recherche (13) va chercher des éléments de données de valeurs de niveau d'accès inférieures à une valeur de niveau d'accès fournie à partir d'une unité externe.

3. Carte à puce selon la revendication 1, dans laquelle le moyen de recherche (13) va chercher des éléments de données de valeurs de niveau d'accès supérieures à une valeur de niveau d'accès fournie à partir d'une unité externe.

4. Carte à puce selon la revendication 1, dans laquelle le moyen de gestion (12) gère, en fonction des services, les valeurs particulières de niveau d'accès qui sont communes à ladite pluralité d'éléments de données utilisés pour un ou une pluralité de services et les valeurs particulières de niveau d'accès à des destinations de liaison affectées auxdits éléments de données.

5. Carte à puce selon la revendication 4, dans laquelle le moyen de recherche (13) va chercher des éléments de données de valeurs de niveau d'accès inférieures à une valeur de niveau d'accès fournie à partir d'une unité externe.

6. Carte à puce selon la revendication 4, dans laquelle le moyen de recherche (13) va chercher des éléments de données de valeurs de niveau d'accès supérieures à une valeur de niveau d'accès fournie à partir d'une unité externe.
